# EUROPEAN PATENT SPECIFICATION

(11) **EP 3 562 219 B1**
(45) Date of publication and mention of the grant of the patent: **27.10.2021**
(21) Application number: 18739070.3
(22) Date of filing: 09.01.2018
(51) Int. Cl.: H04W 52/02

(54) **CHANNEL CONTENTION METHOD AND WUR STATION**
KANALKONFLIKTVERFAHREN UND WUR-STATION
PROCÉDÉ DE CONTENTION DE CANAL ET STATION WUR

(30) Priority: 14.01.2017 CN 201710026817
(43) Date of publication of application: 30.10.2019
(73) Proprietor: Huawei Technologies Co., Ltd., Longgang District Shenzhen, Guangdong 518129 (CN)
(72) Inventor: WANG, Ying, Shenzhen Guangdong 518129 (CN); LI, Yunbo, Shenzhen Guangdong 518129 (CN)
(74) Representative: Körber, Martin Hans
(86) International application number: PCT/CN2018/071931
(87) International publication number: WO 2018/130144

(56) References cited:
- WO-A1-2016/115357
- CN-A- 101 193 016
- CN-A- 102 413 579
- US-A1- 2014 157 009
- US-A1- 2015 358 786
- WU, CHUNHUI et al.: "Detection and Punishment of MAC Layer Misbehavior in Wireless Networks", Computer Technology and Development, vol. 16, no. 11, 30 November 2006 (2006-11-30), pages 222-224,227, XP009515348,
- TANG, SUHUA et al.: "Energy and spectrum efficient wireless LAN by tightly integrating low-power wake-up radio", 2016 IEEE 27th Annual IEEE International Symposium on Personal, Indoor and Mobile Radio Communications - (PIMRC): Mobile and Wireless Networks, 4 September 2016 (2016-09-04), 8 September 2016 (2016-09-08), XP033035505, Retrieved from the Internet: URL:DOI: 10.1109/PIMRC.2016.7794873

## Description

### TECHNICAL FIELD

This application relates to the field of communications technologies, and in particular, to a channel contention method and a WUR station.

### BACKGROUND

In a communication scenario, such as the Internet of Things, a station is usually powered by a battery, and has a very high requirement for low power consumption. Power consumption can be greatly reduced by using a sleeping mechanism, and a longer sleep cycle brings a better energy saving effect. However, an overlong sleep cycle causes an increase in a transmission delay.

To address the foregoing problem, a wake-up radio (WUR) mechanism is introduced into a WLAN network. When an AP or a STA in the WLAN network has data to send, the AP or the STA sends a WUP (Wake-up Packet, wake-up packet) to a data receiving station, to wake up the data receiving station in sleep mode. It can be learned that, use of the WUR (Wake-up Radio, wake-up radio) mechanism can achieve an energy saving effect, without affecting timely data sending.

However, because WUR is introduced into the WLAN network, when a contention-based access mechanism is used, channel contention waiting time setting rules of various stations lead to unfairness in channel contention between the various stations, severely affecting effectiveness of an entire WLAN system.

US 2015/358786 A1 relates to a wireless communication system and provides a method for transmitting/receiving a group addressed frame in a WLAN system and a device therefor. The method whereby a station (STA) in a WLAN system receives a group addressed frame according to one embodiment of the present invention may comprise the steps of: transmitting a first frame to an access point (AP); in response to the first frame, receiving from the AP a second frame comprising information related to the group addressed frame for a first STA; and receiving the group addressed frame from the AP on the basis of the information related to the group addressed frame.

### SUMMARY

This application provides a channel contention method and a WUR station, so as to address unfairness in channel contention between stations.

The present invention is defined by a channel contention method according to independent claim 1 and a WUR station according to independent claim 7.

According to the method in this application, after finishing sending the wake-up packet (WUP), the WUR station waits the time that is the same as the channel contention waiting time of the legacy station, to perform channel contention, so that the WUR station and the legacy station perform channel contention at the same time, thereby eliminating time unfairness in channel contention between the WUR station and the legacy station, and improving effectiveness of an entire WLAN system.

### BRIEF DESCRIPTION OF DRAWINGS

FIG. 1 is a diagram of an application scenario according to this application;
FIG. 2 is a diagram of another application scenario according to this application;
FIG. 3 is a flowchart of a channel contention method according to this application;
FIG. 4 is a schematic diagram of unfair channel contention between a WUR station and a legacy station in DCF channel access;
FIG. 5 is a schematic diagram of fair channel contention between a WUR station and a legacy station in DCF channel access after the WUR station changes a channel contention waiting time;
FIG. 6 is a schematic diagram of unfair channel contention between a WUR station and a legacy station during single-packet transmission in EDCA;
FIG. 7 is a schematic diagram of fair channel contention between a WUR station and a legacy station during single-packet transmission in EDCA after the WUR station changes a channel contention waiting time;
FIG. 8 is a schematic diagram of fair channel contention between a WUR station and a legacy station during TXOP transmission in EDCA when a wake-up packet (WUP) is not a last packet in a TXOP;
FIG. 9 is a schematic diagram of fair channel contention between a WUR station and a legacy station during TXOP transmission in EDCA when a wake-up packet (WUP) is a last packet in a TXOP and RIT ≥ (EIFS - DIFS);
FIG. 10 is a schematic diagram of unfair channel contention between a WUR station and a legacy station during TXOP transmission in EDCA when a wake-up packet (WUP)is a last packet in a TXOP and RIT < (EIFS - DIFS);
FIG. 11 is a schematic diagram of fair channel contention between a WUR station and a legacy station during TXOP transmission in EDCA when a wake-up packet (WUP) is a last packet in a TXOP and RIT < (EIFS - DIFS) after the WUR station changes a channel contention waiting time;
FIG. 12 is another flowchart of a channel contention method according to this application;
FIG. 13 is a schematic diagram of fair channel contention between a WUR station and a legacy station in a data frame manner in DCF channel access;
FIG. 14 is a schematic diagram of fair channel contention between a WUR station and a legacy station in a data frame manner during single-packet transmission in EDCA;
FIG. 15 is a schematic diagram of fair channel contention between a WUR station and a legacy station in a data frame manner during TXOP transmission in EDCA when a wake-up packet (WUP) is the last packet in a TXOP and RIT < (EIFS - DIFS);
FIG. 16 is a schematic structural diagram of a WUR station using a DCF channel access mechanism or single-packet transmission in an EDCA mechanism;
FIG. 17 is a schematic structural diagram of a WUR station using TXOP transmission in an EDCA mechanism;
FIG. 18 is another schematic structural diagram of a WUR station using a DCF channel access mechanism or single-packet transmission in an EDCA mechanism; and
FIG. 19 is another schematic structural diagram of a WUR station using TXOP transmission in an EDCA mechanism.

### DESCRIPTION OF EMBODIMENTS

To describe technical solutions in embodiments of the present invention more clearly, the following briefly describes accompanying drawings required for describing the embodiments of the present invention. Apparently, the accompanying drawings in the following description show merely some embodiments of the present invention, and a person of ordinary skill in the art may derive other drawings from these accompanying drawings without creative efforts.

Two application scenarios of this application are as follows:

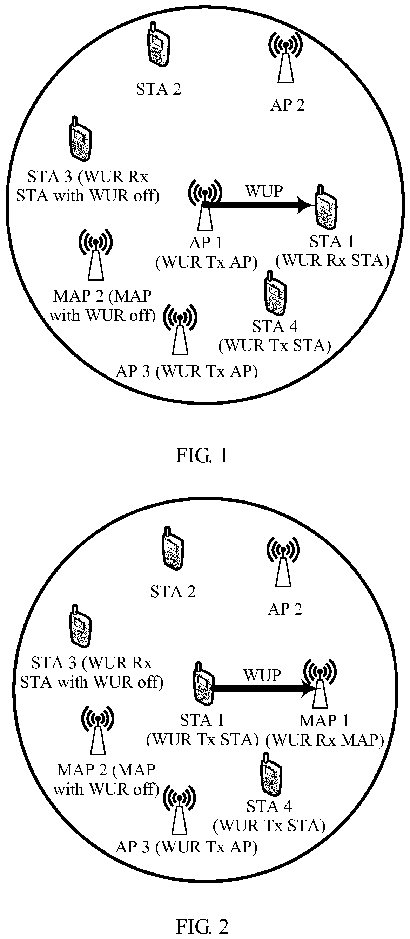

As shown in FIG. 1, an application scenario of this application is: An AP 1 with a WUR wake-up function (WUR Tx AP) sends a wake-up packet (WUP) to a STA 1 with a WUR receiving function (WUR Rx STA). Within coverage of the AP 1, in addition to the WUR STA 1, there are six types of stations: a station STA 2 without a WUR function, a wireless access point AP 2 without a WUR function, a station STA 3 with a WUR receiving function disabled (WUR Rx STA with WUR off), a MAP 2 with a WUR receiving function disabled (MAP with WUR off), an AP 3 with a WUR wake-up function (WUR Tx AP) in another cell, and a STA 4 with a WUR wake-up function (WUR Tx STA) in another cell.

As shown in FIG. 2, another application scenario of this application is: A STA 1 with a WUR wake-up function (WUR Tx STA) sends a wake-up packet (WUP) to a MAP 1 with a WUR receiving function. Within coverage of the STA 1, in addition to the MAP1, there are also six types of stations described above: the STA 2, AP 2, STA 3, MAP 2, AP 3, and STA 4.

In this application, an AP with a WUR wake-up function and a STA with a WUR wake-up function are collectively referred to as a WUR Tx; a STA with a WUR receiving function and a MAP with a WUR receiving function are collectively referred to as a WUR Rx; and a STA without a WUR function, an AP without a WUR function, a STA with a WUR receiving function disabled, a MAP with a WUR receiving function disabled, an AP with a WUR wake-up function in another cell, and a STA with a WUR wake-up function in another cell are collectively referred to as a legacy station because all the six types of stations cannot parse a WUP.

This application addresses unfairness in channel contention between the WUR Tx and the legacy station. The WUR station in this application is the foregoing WUR Tx. The legacy station in this application includes the foregoing six types of legacy stations that cannot parse a WUP, and the legacy station in this application is not limited to a station that cannot parse a WUP in 802.11, but also includes a station that cannot parse a WUP in a next generation of 802.11, namely, 802.11ax, and in a next generation of 802.11ax.

Embodiment 1 in the following is not part of the invention, but an illustrative example necessary for understanding the invention.

### Embodiment 1

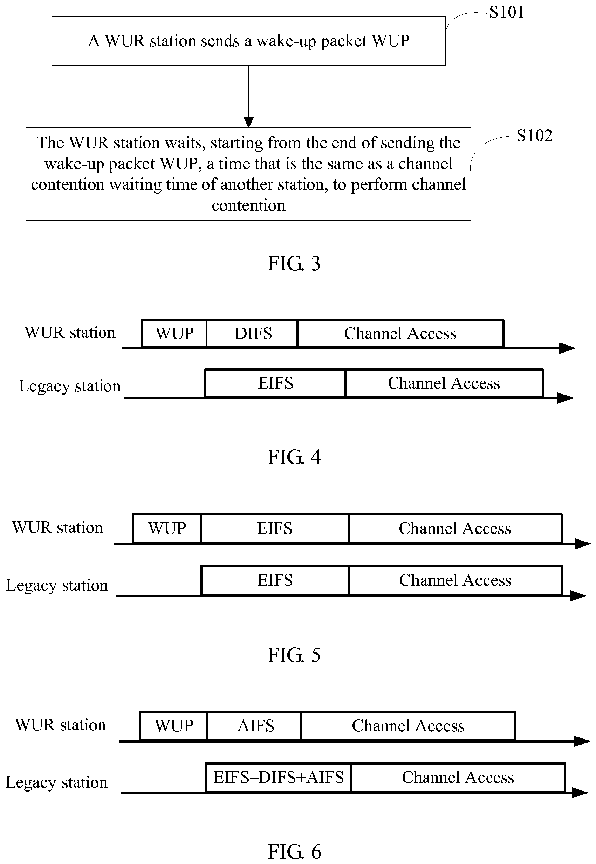

As shown in FIG. 3, this application provides a channel contention method, including the following steps.

S101. A WUR station sends a wake-up packet (WUP).

In S101, the wake-up packet (WUP) sent by the WUR station cannot be parsed by a legacy station, and therefore time unfairness exists in subsequent channel contention between the WUR station and the legacy station.

For example, in all types of channel access using a distributed coordination function (Distributed coordination function, DCF), a basic principle is used: If previous data is received correctly, a station needs to wait a DIPS time (a DIPS is a distributed inter-frame space) before channel contention; or if previous data is received incorrectly, a station needs to wait an EIFS time (an EIFS is an extended inter-frame space) before channel contention, where EIFS > DIFS.

In this step, the WUR station sends the wake-up packet (WUP). Due to lack of a capability to parse the wake-up packet WUP, the legacy station considers the wake-up packet WUP as an error packet and needs to wait an EIFS time before subsequent channel contention. After finishing sending the wake-up packet (WUP), the WUR station waits a DIPS time before subsequent channel contention. Because EIFS > DIFS, the WUR station preempts a channel before the legacy station, and time unfairness exists in channel contention between the WUR station and the legacy station.

S102. The WUR station waits, starting from the end of sending the wake-up packet (WUP), a time that is the same as a channel contention waiting time of a legacy station, to perform channel contention.

In S102, after finishing sending the wake-up packet (WUP), the WUR station does not wait an original channel contention waiting time of the WUR station to perform channel contention, but waits the channel contention waiting time of the legacy station to perform channel contention, so that the WUR station and the legacy station perform channel contention at the same time. For example, during DCF (Distributed coordination function, distributed coordination function) channel access, the original channel contention waiting time of the WUR station is a DIFS, and the channel contention waiting time of the legacy station is an EIFS. According to the method described in this embodiment, after finishing sending the wake-up packet (WUP), the WUR station does not wait the DIPS to perform channel contention, but waits the EIFS to perform channel contention. Therefore, starting from the end of sending the wake-up packet (WUP), the WUR station waits the EIFS to perform channel contention, and the legacy station waits the EIFS to perform channel contention. The WUR station and the legacy station perform channel contention at the same time, thereby ensuring fairness in the channel contention.

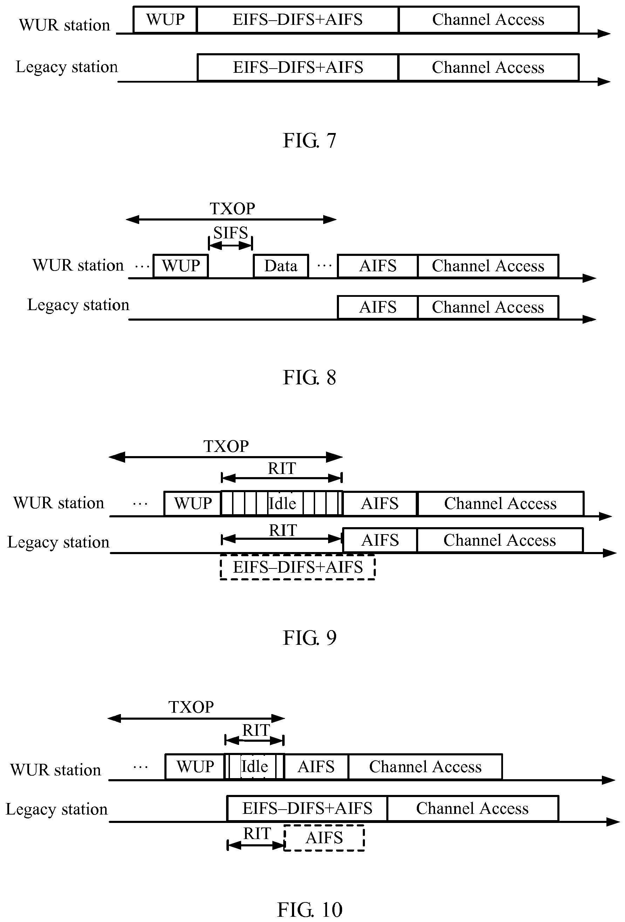

Three specific scenarios in which unfairness exists in channel contention are used as examples below, to implement the method described in Embodiment 1.
1. Distributed coordination function (Distributed coordination function, DCF) channel access
   In a DCF channel access mechanism, after finishing sending the wake-up packet (WUP), the WUR station waits a DIPS (distributed inter-frame space) time to perform channel contention, and the legacy station waits an EIFS (extended inter-frame space) time to perform channel contention, where DIPS < EIFS, as shown in FIG. 4. Therefore, the WUR station preempts a channel before the legacy station, and time unfairness exists in channel contention between the WUR station and the legacy station.
   According to the method described in Embodiment 1, after the end of sending the wake-up packet (WUP), the WUR station waits an EIFS time to perform channel contention. The channel contention waiting time of the legacy station is not changed. The legacy station listens on a channel, and also waits an EIFS time after the end of receiving the wake-up packet (WUP), to perform channel contention. In this way, the WUR station and the legacy station perform channel contention at the same time, thereby ensuring fairness in the channel contention, as shown in FIG. 5.
2. Single-packet transmission in enhanced distributed channel access (Enhanced Distributed Channel Access, EDCA)
   In the single-packet transmission in the EDCA, after finishing sending the wake-up packet (WUP), the WUR station waits an AIFS (arbitration inter-frame space) time to perform channel contention, and the legacy station waits an (EIFS - DIPS + AIFS) time to perform channel contention, where the EIFS is an extended inter-frame space, the DIPS is a distributed inter-frame space, the AIFS is an arbitration inter-frame space, and AIFS < (EIFS - DIPS + AIFS), as shown in FIG. 6. Therefore, the WUR station preempts a channel before the legacy station, and time unfairness exists in channel contention between the WUR station and the legacy station.
   According to the method described in Embodiment 1, after the end of sending the wake-up packet (WUP), the WUR station waits an (EIFS - DIPS + AIFS) time to perform channel contention. The channel contention waiting time of the legacy station is not changed. The legacy station listens on a channel, and also waits an (EIFS - DIPS + AIFS) time after the end of receiving the wake-up packet (WUP), to perform channel contention. In this way, the WUR station and the legacy station perform channel contention at the same time, thereby ensuring fairness in the channel contention, as shown in FIG. 7.
3. TXOP transmission in enhanced distributed channel access (Enhanced Distributed Channel Access, EDCA)

The TXOP transmission in the EDCA is classified into the following three types:
(1) The wake-up packet (WUP) is not a last packet in a TXOP.
(2) The wake-up packet (WUP) is a last packet in a TXOP, and RIT ≥ (EIFS - DIFS), where the RIT is a remaining idle time of a current TXOP.
(3) The wake-up packet (WUP) is a last packet in a TXOP, and RIT < (EIFS - DIFS), where the RIT is a remaining idle time of a current TXOP.

For only the type (3) in the foregoing three types, unfairness exists between the WUR station and the legacy station.
(1) The wake-up packet (WUP) is not a last packet in a TXOP.
   As shown in FIG. 8, if the wake-up packet (WUP) is not the last packet in the TXOP transmission, after the end of the TXOP transmission, both the WUR station and the legacy station wait an AIFS time to perform channel contention, and therefore unfairness does not exist in contention between the WUR station and the legacy station.
(2) The wake-up packet (WUP) is the last packet in a TXOP, and RIT ≥ (EIFS - DIFS), where the RIT is a remaining idle time of a current TXOP.
   As shown in FIG. 9, if the wake-up packet (WUP) is a last packet in a TXOP of the WUR station, and RIT ≥ (EIFS - DIFS), so that (RIT + AIFS) ≥ (EIFS - DIPS + AIFS) is true. According to the 802.11 standards, the WUR station waits an AIFS time after the end of the TXOP transmission, to perform channel contention, and the legacy station selects the larger one of (RIT + AIFS) and (EIFS - DIPS + AIFS) to wait before performing channel contention. Therefore, the legacy station also waits an AIFS time after the end of the TXOP transmission, to perform channel contention, and unfairness does not exist in contention between the WUR station and the legacy station.
(3) The wake-up packet (WUP) is a last packet in a TXOP, and RIT < (EIFS - DIFS), where the RIT is a remaining idle time of a current TXOP.

As shown in FIG. 10, if the wake-up packet (WUP) is a last packet in a TXOP of the WUR station, and RIT < (EIFS - DIFS), so that (RIT + AIFS) < (EIFS - DIPS + AIFS) is true. According to the 802.11 standards, the WUR station waits an AIFS time after the end of the TXOP transmission, to perform channel contention, and the legacy station selects the larger one of (RIT + AIFS) and (EIFS - DIPS + AIFS) to wait before performing channel contention. Therefore, the legacy station waits an (EIFS - DIPS + AIFS) time after the end of receiving the wake-up packet (WUP), to perform channel contention. To be specific, an existing WUR station waits (RIT+AIFS) after the end of sending the wake-up packet (WUP), to perform channel contention, an existing legacy station waits the (EIFS-DIFS+AIFS) time after the end of receiving the wake-up packet (WUP), to perform channel contention, and (RIT + AIFS) < (EIFS - DIPS + AIFS). Therefore, unfairness exists in contention between the WUR station and the legacy station.

Therefore, if a TXOP transmission mechanism in the EDCA is used in the method described in this embodiment, the method further includes: determining that the wake-up packet (WUP) is the last packet in TXOP transmission and RIT < (EIFS - DIFS).

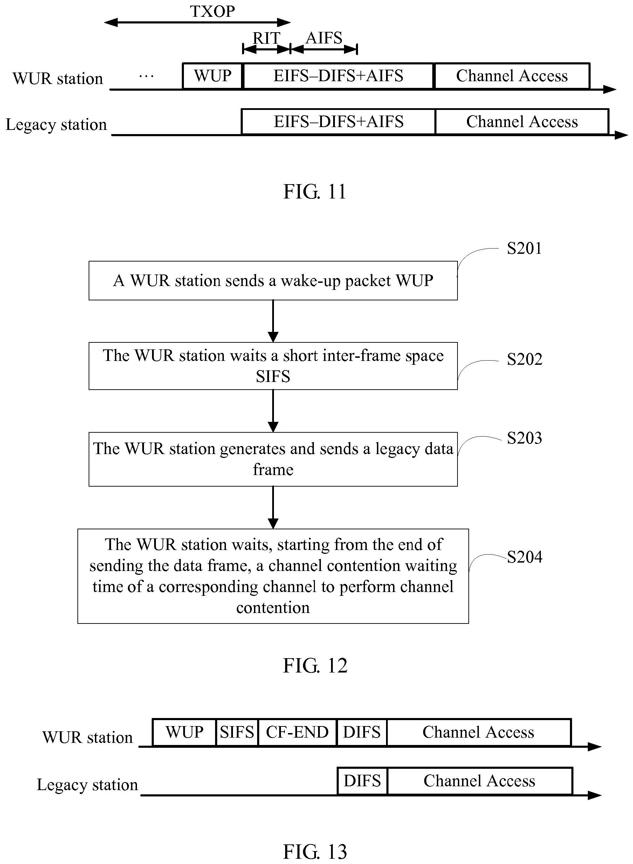

When the TXOP transmission mechanism in the EDCA is used in the method described in this embodiment, the method includes:
sending, by the WUR station, the wake-up packet (WUP);
determining, by the WUR station, whether the wake-up packet (WUP) is a last packet in the TXOP transmission; and if the wake-up packet (WUP) is not the last packet in the TXOP transmission, waiting, by the WUR station, an AIFS time after the end of the TXOP transmission, to perform channel contention, as shown in FIG. 8; or if the wake-up packet (WUP) is the last packet in the TXOP transmission, further determining whether the RIT is less than (EIFS - DIFS); and
determining, by the WUR station, whether the RIT is less than (EIFS - DIFS); and if the RIT is less than (EIFS - DIFS), waiting, by the WUR station, an (EIFS - DIPS + AIFS) time after the end of transmitting the wake-up packet (WUP), to perform channel contention, as shown in FIG. 11; or if the RIT is not less than (EIFS - DIFS), waiting, by the WUR station, an AIFS time after the end of the TXOP transmission, to perform channel contention, as shown in FIG. 9.

The WUR station waits the (EIFS - DIPS + AIFS) time after the end of transmitting the wake-up packet (WUP), to perform the channel contention, as shown in FIG. 11. The channel contention waiting time of the legacy station is not changed. The legacy station listens on a channel, and also waits an (EIFS - DIPS + AIFS) time after the end of sending the wake-up packet (WUP), to perform channel contention. In this way, the WUR station and the legacy station perform channel contention at the same time, thereby ensuring fairness in the channel contention.

In addition, in this embodiment, for a WUR Rx with a WUR function enabled, there is an additional provision for a channel contention time: To ensure fairness, for a WUR Rx whose WUR function is enabled and that is to contend for a channel to send data, although a wake-up packet (WUP) may be correctly identified, after the wake-up packet (WUP) is received, the WUR Rx still waits a time that is the same as a channel contention waiting time of a legacy station, to perform channel contention. Specifically, in a DCF channel access mechanism, channel contention is performed after an EIFS time; and in EDCA, channel contention is performed after an (EIFS - DIPS + AIFS) time.

It can be learned that, according to the method described in Embodiment 1, the WUR station waits, starting from the end of sending the wake-up packet (WUP), the time that is the same as the channel contention waiting time of the legacy station, to perform channel contention, thereby ensuring that the WUR station and the legacy station perform channel contention at the same time.

### Embodiment 2

As shown in FIG. 12, this application provides another channel contention method, including the following steps.

S201. A WUR station sends a wake-up packet (WUP).

S201 is the same as S101 in Embodiment 1, and details are not described herein again.

S202. The WUR station waits a short inter-frame space (SIFS).

In S202, after the end of sending the wake-up packet (WUP), the WUR station waits the short inter-frame space (SIFS). The short inter-frame space (SIFS) is shorter than another inter-frame space, and therefore data transmitted after the short inter-frame space (SIFS) has a relatively high priority. To ensure that a legacy station can quickly and preferentially receive a legacy data frame in the following S203 and S204, after sending the wake-up packet (WUP), the WUR station waits the short inter-frame space (SIFS) and then generates and sends the legacy data frame. The WUR station waits the short inter-frame space (SIFS) to send the legacy data frame. The legacy station may preferentially and quickly receive the legacy data frame, so that the WUR station and the legacy station are adjusted in a timely manner, to perform channel contention at the same time.

S203. The WUR station generates and sends a legacy data frame, so that after receiving the legacy data frame, a legacy station waits a channel contention waiting time of a corresponding channel to perform channel contention.

In S203, the WUR station generates and sends the legacy data frame that can be parsed by the legacy station. Herein, the WUR station sends the legacy data frame in a broadcast manner.

The channel contention waiting time of the corresponding channel is specifically: In a DCF channel access mechanism, the channel contention waiting time is a distributed inter-frame space (DIFS); or in EDCA, the channel contention waiting time is an arbitration inter-frame space (AIFS).

In this embodiment, in a legacy data frame manner, both the WUR station and the legacy station wait the channel contention waiting time of the corresponding channel after the end of sending the legacy data frame, to perform channel contention.

The legacy data frame that can be parsed by the legacy station has a plurality of types, for example, may be a CF-END frame, a CTS-to-self frame whose duration value is set to 0, or an ACK frame whose duration value is set to 0. The legacy data frame that can be parsed by the legacy station in this embodiment includes but is not limited to the foregoing types.

S204. The WUR station waits, starting from the end of sending the legacy data frame, the channel contention waiting time of the corresponding channel to perform channel contention.

In S204, as described in S203, the channel contention waiting time of the corresponding channel is specifically: In a DCF channel access mechanism, the channel contention waiting time is a distributed inter-frame space (DIFS); or in EDCA, the channel contention waiting time is an arbitration inter-frame space (AIFS).

In S203, after receiving the legacy data frame, the legacy station waits the channel contention waiting time of the corresponding channel to perform channel contention. In S204, after finishing sending the legacy data frame, the WUR station waits the channel contention waiting time of the corresponding channel to perform channel contention. A time difference exists between receiving of the legacy data frame by the legacy station and finishing of sending the legacy data frame by the WUR station, but the time difference is small enough to be ignored relative to a channel contention time. It may be considered that the legacy station receives the legacy data frame at the same time point as the WUR station finishes sending the legacy data frame.

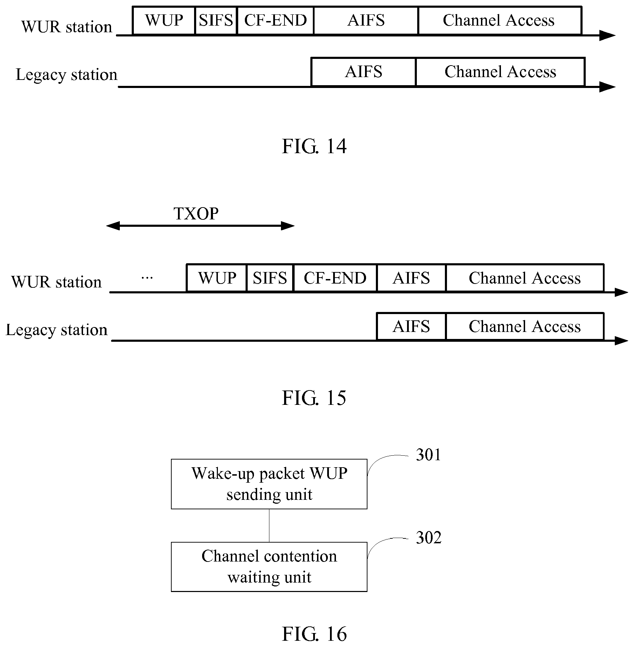

Three specific scenarios in which unfairness exists in channel contention are used as examples below, to implement the method described in Embodiment 2.
1. DCF (Distributed coordination function, distributed coordination function) channel access
   That in the DCF channel access, time unfairness exists in channel contention between the WUR station and the legacy station has been described in Embodiment 1, as shown in FIG. 4, and details are not described herein again.
   According to the method described in Embodiment 2, after sending the wake-up packet (WUP), the WUR station waits the short inter-frame space (SIFS) to generate and send the legacy data frame, and waits, starting from the end of sending the legacy data frame, the channel contention waiting time of the corresponding channel to perform channel contention. In the DCF channel access, the channel contention waiting time is a distributed inter-frame space (DIFS).
   Specifically, as shown in FIG. 13:
   the WUR station sends the wake-up packet (WUP);
   the WUR station waits the short inter-frame space (SIFS);
   the WUR station generates and sends a CF-END frame (in the DCF channel access, the channel contention waiting time is the distributed inter-frame space (DIFS)), so that after receiving the CF-END frame, the legacy station waits the distributed inter-frame space (DIFS) to perform channel contention; and
   the WUR station waits, starting from the end of sending the CF-END frame, the distributed inter-frame space (DIFS) to perform channel contention.
2. Single-packet transmission in EDCA (Enhanced Distributed Channel Access, enhanced distributed channel access) channel access
   That in the single-packet transmission in the EDCA, time unfairness exists in channel contention between the WUR station and the legacy station has been described in Embodiment 1, as shown in FIG. 6, and details are not described herein again.
   Application of Embodiment 2 in the single-packet transmission in the EDCA is the same as that of Embodiment 2 in the foregoing DCF channel access, and details are not described herein again. A difference is that, in the EDCA, the channel contention waiting time is an arbitration inter-frame space (AIFS).
   Specifically, as shown in FIG. 14:
   the WUR station sends the wake-up packet (WUP);
   the WUR station waits the short inter-frame space (SIFS);
   the WUR station generates and sends a CF-END frame (in the EDCA, the channel contention waiting time is the arbitration inter-frame space (AIFS)), so that after receiving the CF-END frame, the legacy station waits the arbitration inter-frame space (AIFS) to perform channel contention; and
   the WUR station waits, starting from the end of sending the CF-END frame, the arbitration inter-frame space (AIFS) to perform channel contention.
3. TXOP transmission in EDCA (Enhanced Distributed Channel Access, enhanced distributed channel access) channel access, where the wake-up packet (WUP) is the last packet in a TXOP, and RIT < (EIFS - DIFS)

During channel contention, the TXOP transmission in the EDCA has three cases, which have been specifically described in Embodiment 1, and details are not described herein again.

Herein, only for a case in which in the TXOP transmission in the EDCA, unfairness exists in channel contention between the WUR station and the legacy station, the method in this embodiment is used to address the unfairness.

Application of the method described in Embodiment 2 in the TXOP transmission in the EDCA is the same as that of Embodiment 2 in the single-packet transmission in the EDCAs, as shown in FIG. 15, and details are not described herein again.

It can be learned that, according to the method described in Embodiment 2, the WUR station generates and sends the legacy data frame, so that after receiving the legacy data frame, the legacy station waits the channel contention waiting time of the corresponding channel to perform channel contention. After the end of sending the legacy data frame, the WUR station waits the channel contention waiting time of the corresponding channel to perform channel contention, thereby ensuring that the WUR station and the legacy station perform channel contention at the same time.
Embodiment 3 in the following is not part of the invention, but an illustrative example necessary for understanding the invention.

### Embodiment 3

As shown in FIG. 16, if a WUR station uses a DCF channel access mechanism or single-packet transmission in an EDCA mechanism, the WUR station includes:
a wake-up packet (WUP) sending unit 301, configured to send a wake-up packet (WUP); and
a channel contention waiting unit 302, configured to wait, starting from the end of sending the wake-up packet (WUP), a time that is the same as a channel contention waiting time of a legacy station, to perform channel contention.

Waiting duration of the channel contention waiting unit 302 varies depending on different channel access mechanisms used by the WUR station. Specifically:

If the WUR station uses the DCF channel access mechanism, the channel contention waiting unit 303 of the WUR station waits an extended inter-frame space (EIFS), to perform channel contention.

If the WUR station uses a single-packet transmission mechanism in EDCA, the channel contention waiting unit 303 of the WUR station waits (EIFS - DIFS + AIFS), to perform channel contention, where the EIFS is an extended inter-frame space, the DIFS is a distributed inter-frame space, and the AIFS is an arbitration inter-frame space.

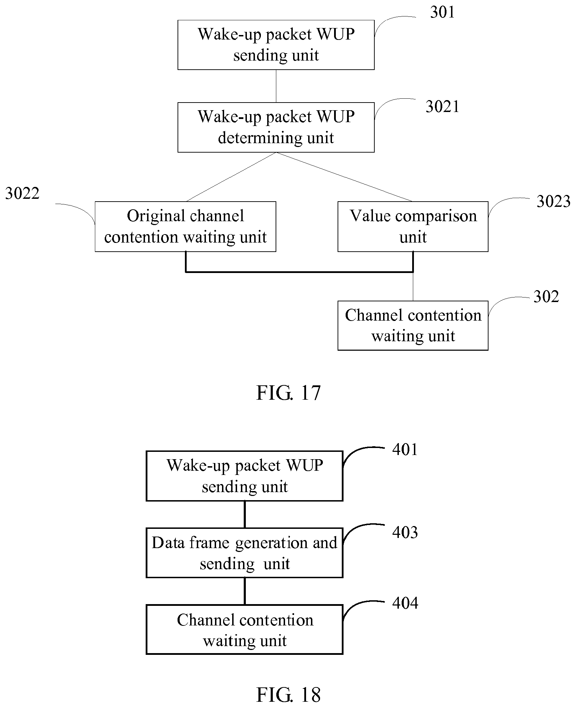

As shown in FIG. 17, if a WUR station uses TXOP transmission in an EDCA mechanism, the WUR station includes:
a wake-up packet (WUP) sending unit 301, configured to send a wake-up packet (WUP); and
a wake-up packet (WUP) determining unit 3021, configured to: determine whether the wake-up packet (WUP) is the last packet in the TXOP transmission; and perform an original channel contention waiting unit 3022 if the wake-up packet (WUP) is not the last packet in the TXOP transmission; or perform a value comparison unit 3023 if the wake-up packet (WUP) is the last packet in the TXOP transmission, where
the original channel contention waiting unit 3022 is configured to wait an arbitration inter-frame space (AIFS) after the end of the TXOP transmission, to perform channel contention; and
the value comparison unit 3023 is configured to: determine whether a RIT is less than (EIFS - DIFS); and perform 302 if the RIT is less than (EIFS - DIFS); or perform 3022 if the RIT is not less than (EIFS - DIFS), where the RIT is a remaining idle time of a current TXOP, the EIFS is an extended inter-frame space, and the DIPS is a distributed inter-frame space; and
a channel contention waiting unit 303, configured to wait, starting from the end of sending the wake-up packet (WUP), (EIFS - DIPS + AIFS), to perform channel contention, where the EIFS is an extended inter-frame space, the DIPS is a distributed inter-frame space, and the AIFS is an arbitration inter-frame space.

The WUR station described in Embodiment 3 waits, starting from the end of sending the wake-up packet (WUP), the time that is the same as the channel contention waiting time of the legacy station, to perform channel contention, thereby ensuring that the WUR station and the legacy station perform channel contention at the same time.

### Embodiment 4

As shown in FIG. 18, if a WUR station uses a DCF channel access mechanism or single-packet transmission in an EDCA mechanism, the WUR station includes:
a wake-up packet WUP sending unit 401, configured to send a wake-up packet (WUP);
a data frame generation and sending unit 403, configured to generate and send a legacy data frame, so that after receiving the legacy data frame, a legacy station waits a channel contention waiting time of a corresponding channel to perform channel contention; and
a channel contention waiting unit 404, configured to wait, starting from the end of sending the legacy data frame, a channel contention waiting time of a corresponding channel to perform channel contention.

Waiting duration of the channel contention waiting unit 404 varies depending on different channel access mechanisms used by the WUR station. Specifically:

If the WUR station uses the DCF channel access mechanism, the channel contention waiting unit 403 waits a distributed inter-frame space (DIFS) to perform channel contention.

If the WUR station uses a single-packet transmission mechanism in EDCA, the channel contention waiting unit 403 waits an arbitration inter-frame space AIFS to perform channel contention.

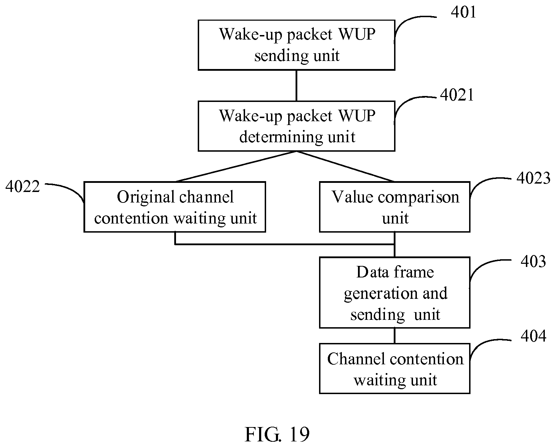

As shown in FIG. 19, if the WUR station uses TXOP transmission in an EDCA mechanism, the WUR station includes:
a wake-up packet (WUP) sending unit 401, configured to send a wake-up packet (WUP);
a wake-up packet (WUP) determining unit 4021, configured to: determine whether the wake-up packet (WUP) is the last packet in the TXOP transmission; and perform an original channel contention waiting unit 4022 if the wake-up packet (WUP) is not the last packet in the TXOP transmission; or perform a value comparison unit 4023 if the wake-up packet (WUP) is the last packet in the TXOP transmission, where
the original channel contention waiting unit 4022 is configured to wait an arbitration inter-frame space (AIFS) after the end of the TXOP transmission, to perform channel contention; and
the value comparison unit 4023 is configured to: determine whether a RIT is less than (EIFS - DIFS); and perform 403 if the RIT is less than (EIFS - DIFS); or perform 4022 if the RIT is not less than (EIFS - DIFS), where the RIT is a remaining idle time of a current TXOP, the EIFS is an extended inter-frame space, and the DIPS is a distributed inter-frame space;
a data frame generation and sending unit 403, configured to generate and send a legacy data frame, so that after receiving the legacy data frame, a legacy station waits an arbitration inter-frame space (AIFS) to perform channel contention; and
a channel contention waiting unit 404, configured to wait, starting from the end of sending the legacy data frame, an arbitration inter-frame space (AIFS) to perform channel contention.

The two WUR stations in Embodiment 4 further include a legacy data frame generation and sending waiting unit connected to the data frame generation and sending unit 403 and configured to wait, after the wake-up packet (WUP) is sent, a short inter-frame space (SIFS), to generate and send the legacy data frame. The legacy data frame is a legacy data frame that can be parsed by the legacy station, for example, may be a CF-END frame, a CTS-to-self frame whose duration value is set to 0, or an ACK frame whose duration value is set to 0. The legacy data frame that can be parsed by the legacy station in this embodiment includes but is not limited to the foregoing types.

It can be learned that, the WUR station described in Embodiment 4 generates and sends the legacy data frame, so that after receiving the legacy data frame, the legacy station waits the channel contention waiting time of the corresponding channel to perform channel contention. After the end of sending the legacy data frame, the WUR station waits the channel contention waiting time of the corresponding channel to perform channel contention, thereby ensuring that the WUR station and the legacy station perform channel contention at the same time.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A channel contention method, comprising:
sending (201), by a WUR station, a wake-up packet, WUP;
waiting (202), by the WUR station, a predetermined short interval of time;
generating and sending (203), by the WUR station, a legacy data frame;
waiting (204), by the WUR station starting from the end of sending the legacy data frame, a channel contention waiting time defined by a type of channel access mechanism; and
performing, by the WUR station, channel contention with a legacy station.

2. The method according to claim 1, wherein a DCF channel access mechanism is used in the method, and the channel contention waiting time of the corresponding channel is a distributed inter-frame space, DIFS.

3. The method according to claim 1, wherein a single-packet transmission mechanism in EDCA is used in the method, and the channel contention waiting time of the corresponding channel is an arbitration inter-frame space, AIFS.

4. The method according to claim 1, wherein a TXOP transmission mechanism in EDCA is used in the method, the method further comprises: determining that the WUP is a last packet in TXOP transmission and RIT < (EIFS - DIFS), and the channel contention waiting time of the corresponding channel is an arbitration inter-frame space, AIFS, wherein the EIFS is an extended inter-frame space, the DIFS is a distributed inter-frame space.

5. The method according to any one of claims 1 to 4, wherein after the sending, by a WUR station, a wake-up packet, WUP, and before the generating and sending, by the WUR station, a legacy data frame, the method further comprises: waiting, by the WUR station, a short inter-frame space, SIFS.

6. The method according to any one of claims 1 to 4, wherein the legacy data frame is one of a CF-END frame, a CTS-to-self frame whose duration value is set to 0, or an ACK frame whose duration value is set to 0.

7. A WUR station, comprising:
a wake-up packet, WUP, sending unit (401), configured to send a wake-up packet, WUP;
a WUP waiting unit, configured to wait a predetermined short interval of time;
a data frame generation and sending unit (403), configured to generate and send a legacy data frame; and
a channel contention waiting unit (404), configured to wait, starting from the end of sending the legacy data frame, a channel contention waiting time defined by a type of channel access mechanism; and
is further configured to perform channel contention with a legacy station.

8. The WUR station according to claim 7, wherein the WUR station uses a DCF channel access mechanism, and the channel contention waiting time of the corresponding channel is a distributed inter-frame space, DIFS.

9. The WUR station according to claim 7, wherein the WUR station uses a single-packet transmission mechanism in EDCA, and the channel contention waiting time of the corresponding channel is an arbitration inter-frame space, AIFS.

10. The WUR station according to claim 7, wherein the WUR station uses a TXOP transmission mechanism in EDCA, the WUR station further comprises a determining unit, configured to determine that the WUP is a last packet in TXOP transmission and RIT < (EIFS - DIFS), and
the channel contention waiting time of the corresponding channel is an arbitration inter-frame space, AIFS, wherein the EIFS is an extended inter-frame space, the DIFS is a distributed inter-frame space.

11. The WUR station according to any one of claims 7 to 10, wherein the legacy data frame is one of a CF-END frame, a CTS-to-self frame whose duration value is set to 0, or an ACK frame whose duration value is set to 0.

## Patentansprüche

1. Kanalkonkurrenzverfahren, das Folgendes umfasst:
Senden (201), durch eine WUR-Station, eines Wake-Up-Pakets (WUP);
Warten (202), durch die WUR-Station, ein zuvor bestimmtes kurzes Zeitintervall lang;
Erzeugen und Senden (203), durch die WUR-Station, eines Legacy-Datenrahmens;
Warten (204), durch die WUR-Station, beginnend mit dem Ende des Sendens des Legacy-Datenrahmens, eine Kanalkonkurrenzwartezeit lang, die durch eine Art von Kanalzugriffsmechanismus definiert ist; und
Durchführen, durch die WUR-Station, von Kanalkonkurrenz mit einer Legacy-Station.

2. Verfahren nach Anspruch 1, wobei in dem Verfahren ein DCF-Kanalzugriffsmechanismus verwendet wird und die Kanalkonkurrenzwartezeit des entsprechenden Kanals ein verteilter Zwischenrahmenraum (distributed inter-frame space - DIFS) ist.

3. Verfahren nach Anspruch 1, wobei in dem Verfahren ein
Einzelpaketübertragungsmechanismus in EDCA verwendet wird und die Kanalkonkurrenzwartezeit des entsprechenden Kanals ein Arbitrierungszwischenrahmenraum (arbitration inter-frame space - AIFS) ist.

4. Verfahren nach Anspruch 1, wobei in dem Verfahren ein TXOP-Übertragungsmechanismus in EDCA verwendet wird, wobei das Verfahren ferner Folgendes umfasst: Bestimmen, dass das WUP ein letztes Paket in der TXOP-Übertragung ist und RIT < (EIFS - DIFS), und die Kanalkonkurrenzwartezeit des entsprechenden Kanals ein Arbitrierungszwischenrahmenraum (AIFS) ist, wobei der EIFS ein erweiterter Zwischenrahmenraum ist, wobei der DIFS ein verteilter Zwischenrahmenraum ist.

5. Verfahren nach einem der Ansprüche 1 bis 4, wobei nach dem Senden, durch eine WUR-Station, eines Wake-up-Pakets (WUP) und vor dem Erzeugen und Senden, durch die WUR-Station, eines Legacy-Datenrahmens, das Verfahren ferner Folgendes umfasst: Warten, durch die WUR-Station, einen kurzen Zwischenrahmenraum (short inter-frame space - SIFS) lang.

6. Verfahren nach einem der Ansprüche 1 bis 4, wobei der Legacy-Datenrahmen ein CF-END-Rahmen, ein CTS-to-Self-Rahmen, dessen Dauerwert auf 0 gesetzt ist, oder ein ACK-Rahmen ist, dessen Dauerwert ist auf 0 gesetzt ist.

7. WUR-Station, die Folgendes umfasst:
eine Wake-Up-Paket(WUP)-Sendeeinheit (401), die konfiguriert ist, um ein Wake-Up-Paket (WUP) zu senden;
eine WUP-Warteeinheit, die konfiguriert ist, um ein zuvor bestimmtes kurzes Zeitintervall lang zu warten;
eine Datenrahmenerzeugungs- und -sendeeinheit (403), die konfiguriert ist, um einen Legacy-Datenrahmen zu erzeugen und zu senden; und
eine Kanalkonkurrenzwarteeinheit (404), die konfiguriert ist, um, beginnend mit dem Ende des Sendens des Legacy-Datenrahmens, eine Kanalkonkurrenzwartezeit lang zu warten, die durch eine Art von Kanalzugriffsmechanismus definiert ist; und
ferner konfiguriert ist, um Kanalkonkurrenz mit einer Legacy-Station durchzuführen.

8. WUR-Station nach Anspruch 7, wobei die WUR-Station einen DCF-Kanalzugriffsmechanismus verwendet und die Kanalkonkurrenzwartezeit des entsprechenden Kanals ein verteilter Zwischenrahmenraum (DIFS) ist.

9. WUR-Station nach Anspruch 7, wobei die WUR-Station in EDCA einen Einzelpaketübertragungsmechanismus verwendet und die Kanalkonkurrenzwartezeit des entsprechenden Kanals ein Arbitrierungszwischenrahmenraum (AIFS) ist.

10. WUR-Station nach Anspruch 7, wobei die WUR-Station in EDCA einen TXOP-Übertragungsmechanismus verwendet, die WUR-Station ferner eine Bestimmungseinheit umfasst, die konfiguriert ist, um zu bestimmen, dass das WUP ein letztes Paket in der TXOP-Übertragung ist und RIT < (EIFS - DIFS) ist und
die Kanalkonkurrenzwartezeit des entsprechenden Kanals ein Arbitrierungszwischenrahmenraum (AIFS) ist, wobei der EIFS ein erweiterter Zwischenrahmenraum ist, wobei der DIFS ein verteilter Zwischenrahmenraum ist.

11. WUR-Station nach einem der Ansprüche 7 bis 10, wobei der Legacy-Datenrahmen ein CF-END-Rahmen, ein CTS-to-Self-Rahmen, dessen Dauerwert auf 0 gesetzt ist, oder ein ACK-Rahmen ist, dessen Dauerwert auf 0 gesetzt ist.

## Revendications

1. Procédé de contention de canal, comprenant :
l'envoi (201), par une station WUR, d'un paquet de réveil, WUP ;
l'attente (202), par la station WUR, d'un court intervalle de temps prédéterminé ;
la génération et l'envoi (203), par la station WUR, d'une trame de données existante ;
l'attente (204), par la station WUR à partir de la fin de l'envoi de la trame de données existante, un temps d'attente de contention de canal défini par un type de mécanisme d'accès au canal ; et
l'exécution, par la station WUR, d'un conflit de canal avec une station existante.

2. Procédé selon la revendication 1, dans lequel un mécanisme d'accès au canal DCF est utilisé dans le procédé, et le temps d'attente de contention de canal du canal correspondant est un espace inter-trames distribué, DIFS.

3. Procédé selon la revendication 1, dans lequel un mécanisme de transmission à paquet unique dans EDCA est utilisé dans le procédé, et le temps d'attente de conflit de canal du canal correspondant est un espace inter-trames d'arbitrage, AIFS.

4. Procédé selon la revendication 1, dans lequel un mécanisme de transmission TXOP en EDCA est utilisé dans le procédé, le procédé comprend en outre : la détermination que le WUP est un dernier paquet en transmission TXOP et RIT < (EIFS - DIFS), et le canal le temps d'attente de contention du canal correspondant est un espace inter-trames d'arbitrage, AIFS, dans lequel l'EIFS est un espace inter-trames étendu, le DIFS est un espace inter-trames distribué.

5. Procédé selon l'une quelconque des revendications 1 à 4, dans lequel après l'envoi, par une station WUR, d'un paquet de réveil, WUP, et avant la génération et l'envoi, par la station WUR, d'une trame de données existante, le procédé comprend en outre : l'attente, par la station WUR, d'un court espace inter-trames, SIFS.

6. Procédé selon l'une quelconque des revendications 1 à 4, dans lequel la trame de données existante est une trame CF-END, une trame CTS-to-self dont la valeur de durée est définie sur 0 ou une trame ACK dont la valeur de durée est définie sur 0.

7. Station WUR, comprenant :
une unité d'envoi (401) de paquet de réveil, WUP, configurée pour envoyer un paquet de réveil, WUP ;
une unité d'attente WUP, configurée pour attendre un court intervalle de temps prédéterminé ;
une unité de génération et d'envoi de trame de données (403), configurée pour générer et envoyer une trame de données existante ; et
une unité d'attente de contention de canal (404), configurée pour attendre, à partir de la fin de l'envoi de la trame de données existante, un temps d'attente de contention de canal défini par un type de mécanisme d'accès au canal ; et
est en outre configurée pour effectuer un conflit de canaux avec une station existante.

8. Station WUR selon la revendication 7, dans laquelle la station WUR utilise un mécanisme d'accès au canal DCF, et le temps d'attente de contention de canal du canal correspondant est un espace inter-trames distribué, DIFS.

9. Station WUR selon la revendication 7, dans laquelle la station WUR utilise un mécanisme de transmission à paquet unique dans EDCA, et le temps d'attente de contention de canal du canal correspondant est un espace inter-trames d'arbitrage, AIFS.

10. Station WUR selon la revendication 7, dans laquelle la station WUR utilise un mécanisme de transmission TXOP en EDCA, la station WUR comprend en outre une unité de détermination, configurée pour déterminer que le WUP est un dernier paquet en transmission TXOP et RIT < (EIFS - DIFS), et
le temps d'attente de conflit de canaux du canal correspondant est un espace inter-trames d'arbitrage, AIFS, dans laquelle l'EIFS est un espace inter-trames étendu, le DIFS est un espace inter-trames distribué.

11. Station WUR selon l'une quelconque des revendications 7 à 10, dans laquelle la trame de données existante est l'une d'une trame CF-END, d'une trame CTS-to-self dont la valeur de durée est mise à 0, ou d'une trame ACK dont la durée la valeur est définie sur 0.
